# EUROPÄISCHE PATENTSCHRIFT

(11) **EP 2 012 967 B1**
(45) Veröffentlichungstag und Bekanntmachung des Hinweises auf die Patenterteilung: **01.07.2009**
(21) Anmeldenummer: 07724365.7
(22) Anmeldetag: 19.04.2007
(51) Int. Cl.: B23Q 16/06

(54) **ANTRIEB FÜR EINE RUNDSCHALTEINHEIT**
DRIVE FOR A ROTARY INDEXING UNIT
ENTRAÎNEMENT POUR UNE UNITÉ DE TRANSFERT CIRCULAIRE

(30) Priorität: 21.04.2006 DE 102006019140
(43) Veröffentlichungstag der Anmeldung: 14.01.2009
(73) Patentinhaber: Friedemann Wagner GmbH, 78559 Gosheim (DE)
(72) Erfinder: WAGNER, Friedemann, 78559 Gosheim (DE)
(74) Vertreter: Neunert, Peter Andreas
(86) Internationale Anmeldenummer: PCT/EP2007/003428
(87) Internationale Veröffentlichungsnummer: WO 2007/121914

(56) Entgegenhaltungen:
- EP-A- 1 323 493
- EP-A2- 1 323 494
- DD-A1- 265 351
- DE-A1- 2 819 412
- GB-A- 2 139 926
- US-A- 3 824 877

## Beschreibung

Die Erfindung betrifft eine Rundschalteinheit mit einem - mittels eines in einem Gehäuse angeordneten Antriebes - um eine Schwenkachse schwenkbaren Schwenkteller, wobei der Schwenkteller in mindestens einer Anhalteposition mittels einer Positioniervorrichtung, die mindestens einen pneumatisch oder hydraulisch bewegbaren und in einer Ausnehmung verrastbaren Positionierbolzen aufweist, fixierbar ist.

Aus der US 3 824 877 A und aus der DD 265 351 A1 ist eine derartige Rundschalteinheit bekannt. Dort weist eine komplizierte hydraulische Positioniervorrichtung zwei Positionierbolzen auf. Beide Positionierbolzen werden wechselweise angetrieben.

Solche Rundschalteinheiten werden u.a. als Werkstückträger oder Träger von Werkstückpaletten verwendet. Die einzelne Rundschalteinheit ist in der Regel ein Teil einer Mehrseitenbearbeitungsmaschine. Ggf. sitzen auch mehrere dieser Einheiten auf einem großen Rundschalttisch einer Rundtaktmaschine.

Eine Rundschalteinheit besitzt einen z.B. das Werkstück tragenden Schaltteller, der kontinuierlich z.B. über ein Schneckengetriebe oder diskontinuierlich z.B. über den aus DD 265 351 A1 bekannten Antrieb oder über ein Zahnstangengetriebe angetrieben wird. Rundschalteinheiten mit letzterem Antrieb haben z.B. einen Schwenkbereich von 360 Winkelgraden. Der Schaltteller wird in bestimmten Teilschritten positionier- und wiederholgenau getaktet. In den gewählten Anhaltepositionen wird der Schaltteller arretiert.

Der vorliegenden Erfindung liegt die Aufgabe zugrunde, eine Rundschalteinheit zu entwickeln, die eine präzise Positioniervorrichtung aufweist. Dabei soll der Antrieb und die Positioniervorrichtung sicher und verschleißarm funktionieren. Auch soll ohne eine Beeinträchtigung der Positionier- und Wiederholgenauigkeit der bisherige Bauraum der Rundschalteinheit beibehalten werden.

Diese Aufgabe wird mit den Merkmalen des Anspruchs 1 gelöst. Dazu ist zwischen einem Abtriebselement des Antriebs und einem Antriebselement des Antriebs ein in einer Hubrichtung axial längsverschiebbares Zahnrad angeordnet. An dem Zahnrad und an dem Abtriebselement sind Kupplungselemente angeordnet, die außerhalb der Anhaltepositionen des Schwenktellers im gegenseitigen Eingriff stehen. Der seitlich versetzt zum Zahnrad angeordnete Positionierbolzen hat eine Mittellinie, die zumindest annähernd parallel zur Mittellinie des Zahnrades orientiert ist. Der Positionierbolzen ist zur Mitnahme des Zahnrades in Hubrichtung mit dem Zahnrad über einen Schaltbügel mechanisch gekoppelt.

Mit der Erfindung wird eine Rundschalteinheit geschaffen, die eine Positioniervorrichtung aufweist, über die der Schwenkteller in mindestens einer seiner Anhaltepositionen präzise positioniert wird. Die Positionierung erfolgt durch einen Positionierbolzen, der bei stehendem Schwenkteller in eine an diesem angeordnete Ausnehmung über eine Hubbewegung eintaucht. Die Hubbewegung wird zeitgleich dazu benutzt, den Schwenkteller von seinem Antrieb zu trennen. Dadurch bestimmt ausschließlich die Positioniereinrichtung die genaue Position des Schwenktellers.

Bei dieser Rundschalteinheit wird ferner bei einer Überlastung des werkstücktragenden Schwenktellers, letzter vom Antrieb der Rundschalteinheit abgekuppelt. Dazu dient als Überlastsicherung z.B. ein Mehrfachrastgesperre. Das Gesperre entsperrt sich beim Überschreiten einer z.B. konstruktiv vorgegebenen oder individuell vorgebbaren Halte- bzw. Verzögerungskraft. Durch das Entsperren kann sich der Schwenkteller ggf. zusätzlich bremsend noch ein Stück weit weiterdrehen. Auf diese Weise wird u.a. eine Beschädigung oder Zerstörung der Antriebsverzahnung verhindert.

Weitere Einzelheiten der Erfindung ergeben sich aus den Unteransprüchen und der nachfolgenden Beschreibung einer schematisch dargestellten Ausführungsform:
- Figur 1:: Rundschalteinheit im vertikalen Längsschnitt, wobei die Tellerrotationsachse in diesem Schnitt liegt;
- Figur 2:: Rundschalteinheit im vertikalen Teillängsschnitt;
- Figur 3:: wie Figur 2, jedoch mit betätigtem Kupplungsan trieb;
- Figur 4:: Überlastsicherung in Sperrlage;
- Figur 5:: Überlastsicherung beim Ausheben des Sperrers;
- Figur 6:: Überlastsicherung, entsperrt;
- Figur 7:: Schaltbügel in der Draufsicht mit geschnittenen Positionierbolzen.

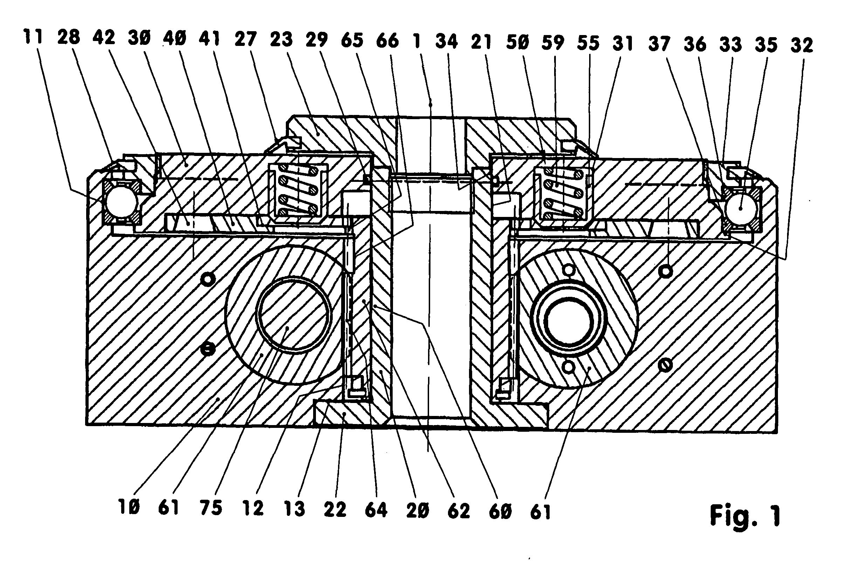

Die Figuren 1 bis 3 zeigen eine Rundschalteinheit mit einem Zahnstangenantrieb 60, einer Positioniervorrichtung 80 und einer Überlastsicherung in Form eines Rastgesperres 50.

Die Rundschalteinheit hat einen in einem z.B. quaderförmigen Gehäuse 10 direkt gelagerten Schwenkteller 30. Zur Lagerung des Schwenktellers 30 hat das Gehäuse 10 eine ringnutförmige Ausnehmung 11, in der ein Drahtkugellager 35 oder ein vergleichbares Vierpunktlager sitzt. Die als Lageraußenring wirkenden Lagerdrähte sind dort gelagert. Der z.B. scheibenförmig gestaltete Schwenkteller 30 nimmt die Lagerdrähte 36, 37 auf, die die Funktion als Lagerinnenring übernehmen. Zur Aufnahme des unteren Lagerdrahtes 36 hat der Schwenkteller 30 einen Wellenbund 32. Der obere Lagerring 37 wird durch einen am Schwenkteller 30 angeordneten Einstellring 33 spieleinstellbar gehalten.

Das Gehäuse 10 hat u.a. eine zentrale Durchgangsbohrung 12 mit einem bodenseitigen Gehäusebund 13. Am Gehäusebund 13 ist zentriert ein hohler Lagerzapfen 20 mittels eines Zapfenflansches 22 befestigt. Der Lagerzapfen 20 durchdringt auch die zentrale Bohrung 34 des Schwenktellers 30. Im Bereich des Schwenktellers 30 ist der Lagerzapfen 20 über eine zentrierende Montagefuge mit einem flanschartigen Telleraufsatz 23 starr verbunden. Der ortsfeste Telleraufsatz 23 überdeckt zumindest bereichsweise das Zentrum des Schwenktellers 30.

Auf der zylindrischen Außenkontur 21 des Lagerzapfens 20 sitzt z.B. gleitgelagert ein Stirnrad 62. Das Stirnrad 62 kämmt im Ausführungsbeispiel mit zwei Zahnstangen 61. Beide zueinander parallel orientierte Zahnstangen 61 werden pneumatisch oder hydraulisch bewegt. In den Zahnstangen 61 sind pneumatische oder hydraulische Dämpfer 75 angeordnet, um u.a. die passive Schwenktellerbewegung im Bereich der Endlagen zu dämpfen.

Nach Figur 1 hat das Stirnrad 62 zwei durch eine Taille 66 unterteilte Verzahnungen 64, 65. Die hier untere Verzahnung 64 kämmt mit den Verzahnungen der Zahnstangen 61, während die obere Verzahnung 65 das Stirnrad 62 mit einer Abtriebsscheibe 51 formschlüssig kuppelt. Die Abtriebsscheibe 51 ist radial und axial gleitgelagert am Schwenkteller 30 angeordnet. Dazu sitzt sie zentriert an einer am Schwenkteller 30 befestigten Teilscheibe 40, die zur Abtriebsscheibe 51 hin einen Umgriffsbund 41 aufweist. Die Teilscheibe 40 ist mit dem Schwenkteller 30 starr verbunden. Auch weist sie in Figur 1 zwei konische Teilungsbohrungen 42 auf. Die Mittellinien dieser beiden Teilungsbohrungen 42 liegen mit der Schwenkachse 1 in einer Ebene. Zudem sind alle drei Mittellinien parallel zueinander ausgerichtet. Die Mittellinien der Teilungsbohrungen 42 haben gegenüber der Mittellinie 1 den gleichen Abstand.

Nach Figur 1 ist die Abtriebsscheibe 51 mit dem Schwenkteller 30 über zwei Rastgesperre 50 verrastet. Dazu hat der Schwenkteller 30 pro Rastgesperre 50 eine von seiner Rückseite aus eingearbeitete Sacklochbohrung 31. Gegenüber dieser Sacklochbohrung 31 hat die Abtriebsscheibe 51 eine kegelstumpfförmige Sperrausnehmung 52. Die Mittellinien der Sacklochbohrung 31 und der Ausnehmung 52 sind hier jeweils deckungsgleich.

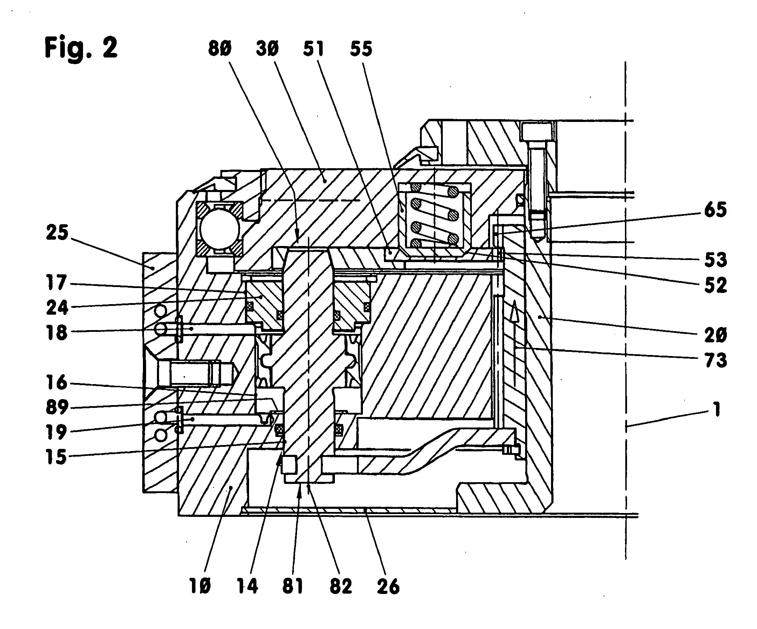

In der Sacklochbohrung 31 sitzt federbelastet ein topfförmiger Sperrerbolzen 55. Der Boden 56 des Sperrerbolzens 55 ist so angefast, dass er in Sperrstellung formgenau in die Sperrausnehmung 52 der Abtriebsscheibe 51 passt, vgl. Figur 2.

Der Schwenkteller 30 ist gegenüber dem ortsfesten Gehäuse 10 und dem damit starr verbundenen Telleraufsatz 23 mittels der von außen sichtbaren Lippendichtungen 27, 28 und einem O-Ring 29 abgedichtet.

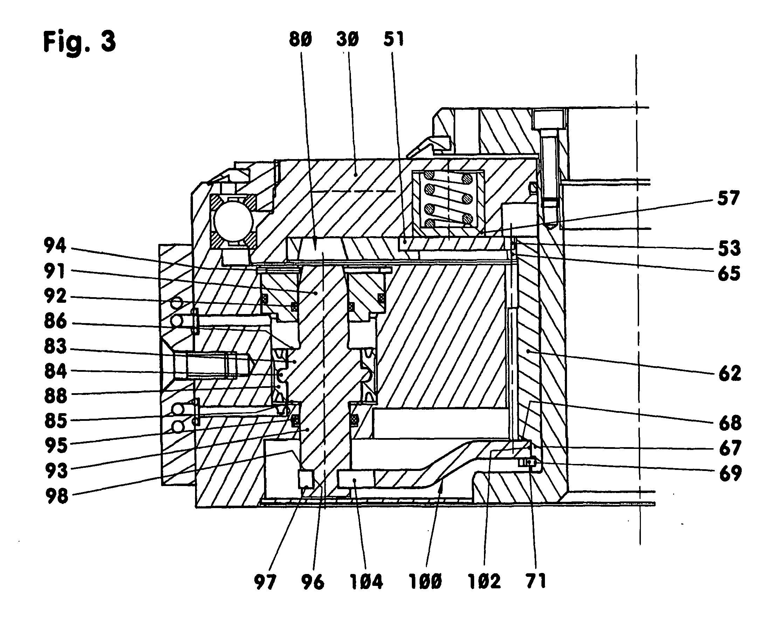

In den Figuren 2 und 3 ist die Rundschalteinheit in einer gegenüber der Figur 1 um 90 Winkelgrade geschwenkten Position halbseitig geschnitten dargestellt. In Figur 3 befindet sich das Stirnrad 62 - wie schon in der Figur 1 - in einer unteren Anschlagposition. Hierbei ist die Abtriebsscheibe 51 drehstarr mit dem Stirnrad 62 gekuppelt. Die stirnradseitige Kupplungsverzahnung 65 greift in die Verzahnung der Abtriebsscheibe 51 ein.

Am unteren Ende hat das Stirnrad 62 ein zylindrisches Endstück 67 mit einer Ringnut 69. Auf dem Endstück 67 sitzt ein Schaltbügel 100 über seine mittige Bohrung 102 mit Spiel. Axial wird der Schaltbügel 100 zwischen einem Wellenbund 68 und einem in der Ringnut 69 sitzenden Sicherungsring 71 gehalten.

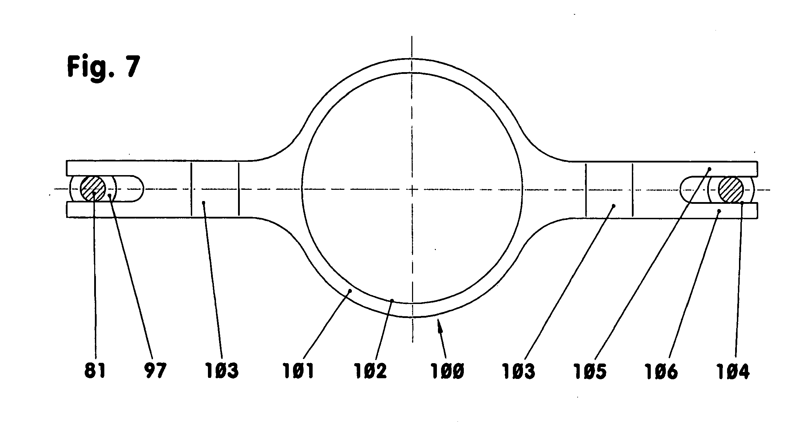

Nach Figur 7 besteht der Schaltbügel aus einem Ring 101, an dem zwei sich gegenüber liegende Bügelarme 103 abstehen. Jeder Bügelarm 103 ist zweifach gebogen, vgl. Figuren 2 und 3, so dass im Einbauzustand die freien, gegabelten Enden tiefer liegen als der Ring 101. Die gegabelten Enden sind gegenüber dem Ring 101 parallel höhenversetzt. An dem freien Ende eines jeden Bügelarmes 103 ist eine Nut 104 eingefräst. Dadurch sind dort jeweils zwei Gabelzinken 105, 106 entstanden.

Die paarweise angeordneten Gagelzinken 105 und 106 greifen in eine ringnutförmige Schaltnut 96 eines Positionierbolzens 81 ein. Der Positionierbolzen 81 ist ein antreibendes Teil einer Positioniervorrichtung 80. Die unteren planen Flächen der Gabelzinken 105 und 106 liegen jeweils auf der unteren Nutwandung 97 der Schaltnut 96 auf. Die Gabelzinken 105 und 106 berühren die obere Nutwandung 98 in der Regel nicht, vgl. Figur 3.

Der z.B. aus einem Teil hergestellte Positionierbolzen 81 umfasst zwei Kolbenstangen 91, 93 und einen dazwischen angeordneten Kolben 83. Die Kolbenstangen 91, 93 und der Kolben 83 haben eine gemeinsame Mittellinie 82. Die obere Kolbenstange 91 trägt an ihrem oberen freien Ende einen Indexkonus 94.

Die Kolbenstangen 91, 93 und der Kolben 83 sitzen in einer Stufenbohrung 14 des Gehäuses 10. Die Mittellinie der Stufenbohrung 14 ist z.B. parallel zur Schwenkachse 1 der Rundschalteinheit ausgerichtet. Die Stufenbohrung 14 ist in drei Abschnitte aufgeteilt: den unteren Führungsabschnitt 15, den Zylinderabschnitt 16 und den Deckelabschnitt 17. Im Deckelabschnitt 17 sitzt ein ringförmiger Führungsdeckel 24. Er ist gegenüber der Stufenbohrung 14 und gegenüber der Kolbenstange 91 jeweils mit einem Dichtring abgedichtet. In der Bohrung des Führungsdeckels 24 ist die obere Kolbenstange 91 geführt, während die untere Kolbenstange 93 im unteren Führungsabschnitt 15 präzise gelagert ist. Auch der Führungsabschnitt 15 weist einen Dichtring 95 auf.

Im Zylinderabschnitt 16 bewegt sich der Kolben 83. Da der Kolben 83 für den Positionierbolzen 81 keine Führungsaufgabe in der Stufenbohrung 14 hat, trägt er einen Dichtring 88, der die gesamte radiale Kolbenaußenwandung bedeckt. Der doppeltdichtende Dichtring 88 stützt sich in Axialrichtung an einem umlaufenden Steg 84 ab.

In den oberen und den unteren Endbereich des Zylinderabschnittes 16 mündt jeweils eine Bohrung 18, 19. Diese Bohrungen werden wahlweise über eine Verteiler- oder Steuerplatte 25 zum Auf- oder Abwärtsfahren des Positionierbolzens 81 mit Druckmittel versorgt.

Nach Figur 3 befindet sich der Positionierbolzen 81, das Stirnrad 62 und der Schaltbügel 100 in einer unteren Position. Das Stirnrad 62 liegt auf dem Zapfenflansch 22 auf. Der Schaltbügel 100 beführt in axialer Richtung nicht die Ringnut 69. Der Grund hierfür liegt zum einen in der Größe des Spiels zwischen dem Schaltbügel 100 und der Ringnut 69 und zum anderen in der Dicke einer unterhalb des Kolbens 83 angeordneten Distanzscheibe 89. Letztere ist auf der unteren Kolbenstange 93 gelagert, vgl. Figur 2. Durch eine geeignete Wahl der Distanzscheibe 89 wird beispielsweise dafür gesorgt, dass nur die Innenwandung der Bohrung 102 des Schaltbügels 100 die Ringnut 69 berührt. In axialer Richtung liegt der Schaltbügel 100 nicht am rotierenden Stirnrad 62 an. Dadurch werden dort Verschleiß und Geräuscherzeugung vermieden.

Wird die Kolbenunterseite 85 - bei stehendem Stirnrad 62 - über die Bohrung 19 mit Druckmittel versorgt, so bewegt sich der Positionierbolzen 81 nach oben. Die untere Kolbenstange 93 zieht über die Schaltnut 96 den Schaltbügel 100 und damit auch das Stirnrad 62 nach oben. U.a. um ein Verkanten zu vermeiden, hat die Rundschalteinheit beispielsweise zwei einander gegenüberliegende Positionierbolzen 81.

Die Aufwärtsbewegung des Positionierbolzens 81 ist erst beendet, wenn die Indexkonen 94 der beiden Positionierbolzen 81 in die Teilungsbohrungen 42 einrasten, vgl. Figur 2. Damit ist der Schwenkteller 30 in einer von z.B. mehreren Vorzugsstellungen fixiert. Der Indexkonus 94 positioniert den Schwenkteller 30 präzise gegenüber dem Gehäuse 10. Ein mögliches Verzahnungsspiel im Antrieb 60 oder ein ggf. auftretendes Umkehrspiel hat keinen Einfluss auf die Wiederholgenauigkeit der Lagefixierung.

Parallel zum Teilvorgang wird die Kupplungsverzahnung 65 des Stirnrades 62 nach oben aus der Kupplungsverzahnung 53 der Abtriebsscheibe 51 herausgeschoben. Der Antrieb 60 ist nun vom Schwenkteller 30 abgekuppelt.

Soll nun der Schwenkteller 30 wieder eingekuppelt werden, wird die Oberseite 86 des Kolbens 83 mit Druckmittel beaufschlagt. Der Positionierbolzen 81 fährt abwärts, löst die Indexverriegelung und kuppelt das Stirnrad 62 wieder mit der Abtriebsscheibe 51. Die nächste Drehbewegung des Schwenktellers 30 kann gestartet werden.

Die Rundschalteinheit hat eine mechanische Überlastsicherung in Form von zwei Rastgesperren 50. Die Rastgesperre 50 sollen verhindern, dass am oder auf dem Schwenkteller 30 gelagerte Werkstücke oder andere Bauteile aufgrund ihrer trägen Masse die Verzahnung des Antriebs 60 schädigen oder zerstören. Ein solcher Fall tritt ein, wenn sich die antreibenden Zahnstangen 61 ihrem jeweiligen Verfahrwegende nähern und die Antriebskräfte in Kombination mit den Dämpfwirkungen der Dämpfer 75 nicht ausreichen, um den beladenen Schwenkteller 30 bis zum Erreichen des Verfahrwegendes vollständig abzubremsen. In diesem Fall werden die sich gerade im Eingriff befindenden Zähne der Zahnstangen 61 und des Stirnrades 62 maximal auf Biegung belastet. Übersteigt die Zahnbiegespannung den zulässigen Grenzwert, brechen die Zähne in der Regel im Bereich der Zahnfüße.

Um dem vorzubeugen, greifen die Sperrerbolzen 55 des Schwenktellers 30, vgl. Figur 2, - bei Überlast lösbar - in die Sperrausnehmungen 52 der Abtriebsscheibe 51. Letztere hat im Zusammenhang mit der Überlastsicherung die Funktion einer Sperrscheibe.

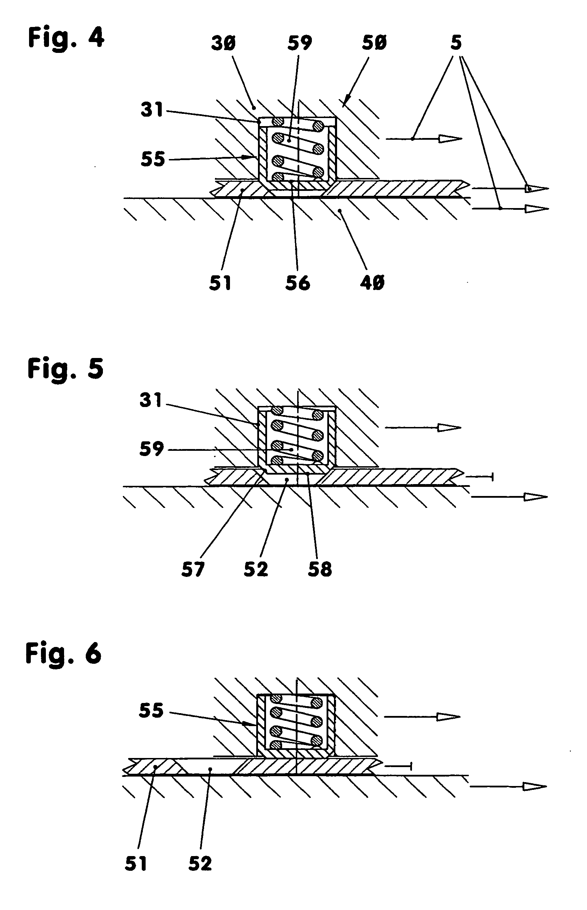

Die zylindrische Außenkontur des Sperrerbolzens 55 bildet mit der zylindrischen Wandung der führenden Sacklochbohrung 31 ein Schubgelenk. Die Bewegungsrichtung des Schubgelenks ist axial zur Sperrscheibe 51 ausgerichtet. Damit hat das Rastgesperre 50 keine Vorzugsrichtung. Der in die Sperrausnehmung 52 eingreifende Teil des Sperrerbolzens 55 ist ein Kegelstumpf mit einem Kegelwinkel von 90 Winkelgraden. Ausschließlich der Kegelstumpfabschnitt 57 liegt in der Sperrausnehmung 52 an, vgl. auch Figuren 5-7. Die untere - der Sperrscheibe 51 zugewandte - Stirnfläche 58 des Sperrerbolzens 55 ist plan gestaltet. Die Längsausdehnung des Sperrerbolzens 55 ist mindestens wenige Zehntel Millimeter kürzer als die Tiefe der Sacklochbohrung 31, so dass der Sperrerbolzen 55 vollständig in die Sacklochbohrung 31 eintauchen kann.

Im z.B. zylindrischen Innenraum des Sperrerbolzens 55 ist ein Federelement 59 in Form einer Schraubenfeder als Rastfeder angeordnet. Die Rastfeder stützt sich zwischen dem Boden der Sacklochbohrung 31 und dem Boden 56 des Sperrerbolzens 55 ab. Die Innenwandung des Sperrerbolzens 55 dient als Seitenführung für die Schraubenfeder 59. Ggf. kann der Sperrerbolzen 55 in seinem Innenraum auch einen zentralen Federführungsbolzen aufweisen. Die Schraubenfeder 59 kann durch die Variation der Windungszahl und/oder der Drahtstärke gezielt auf eine bestimmte Haltekraft ausgelegt werden. Auch kann die Haltekraft beispielsweise über eine hier nicht näher dargestellte Stellschraube individuell einstellbar sein, welche auf die Schraubenfeder 59 einwirkt und deren Verstellkraft variabel vorgibt. Die Schraubenfeder 59 kann auch durch eine Gruppe von Federn ersetzt werden. So können z.B. Tellerfedern verschiedenfach gestapelt eingesetzt werden. Anstelle des mechanischen Federelements 59 kann auch ein pneumatisches oder ein hydropneumatisches Federelement verwendet werden.

Die Sperrausnehmung 52 hat eine kegelstumpfmantelförmige Wandung, deren Kegelwinkel ebenfalls 90 Winkelgrade beträgt. Entgegen den Darstellungen in den Figuren 1 und 2 kann die einzelne Sperrausnehmung 52 die Sperrscheibe 51 vollständig durchdringen, vgl. Figuren 4 bis 6.

In den Figuren 4 bis 6 ist ein Rastgesperre 50 in drei Positionen dargestellt. Nach Figur 4 bewegt sich der Schwenkteller 30 zusammen mit dem Sperrerbolzen 55 der verrasteten Sperrscheibe 51 und der tragenden Teilscheibe 40 z.B. in Richtung 5.

Gemäß der Figur 5 schwenken der Schwenkteller 30, der Sperrerbolzen 55 und die Teilscheibe 40 weiter, obwohl die Sperrscheibe 51 vom Antrieb angehalten wurde. Der Sperrerbolzen 55 rutscht mit seinem Kegelstumpfabschnitt 57 an der Wandung der Sperrausnehmung 31 unter einem Zusammendrücken der Schraubenfeder 59 nach oben. Auf die linienhafte Kontaktfläche zwischen dem Kegelstumpfabschnitt 57 und der Sperrausnehmung 52 wirkt beim dargestellten Ausführungsbeispiel pro Rastgesperre 50 eine Kraft, die größer ist als die Summe aus der Federkraft und aus der in der Kontaktfläche vorhandenen Reibkraft.

Nach Figur 6 hat der Sperrerbolzen 55 die Sperrausnehmung 52 vollständig verlassen. Nur noch die plane Stirnfläche 58 liegt vollflächig reibend auf der Sperrscheibe 51 auf.

Nach dem Auslösen der Überlastsicherung, d.h. dem Entsperren des oder der Rastgesperre 50, wird der Schwenkteller 30 vor- oder zurückgedreht, bis der jeweilige Sperrerbolzen 55 in der entsprechenden Sperrausnehmung 52 der Sperrscheibe 51 einrastet.

Zur Änderung der Haltekraft kann der Kegelwinkel des Kegelstumpfabschnitts 57 vergrößert oder verkleinert werden. Ggf. kann auch anstelle des Kegelstumpfabschnitts 57 eine Kugelkalotte benutzt werden.

Bei der in den Figuren dargestellten Variante liegt der Sperrerbolzen 55 axial an der Sperrscheibe 51 an. Alternativ hierzu kann er auch radial oder tangential die Sperrscheibe 51 verrastend kontaktieren.

In einer anderen Variante kann der Sperrerbolzen 55 auch in Abtriebsscheibe 51 und die Sperrausnehmung 52 im Schwenkteller 30 angeordnet werden.

In den bisherigen Ausführungen ist der Sperrer - also hier der Sperrerbolzen 55 - als Führung ein Schubgelenk. Selbstverständlich kann der Sperrer z.B. ersatzweise in einen Drehschubgelenk, einen Schwenkgelenk, einen Schraubgelenk oder einem Biegefedergelenk geführt sein.

### Bezugszeichenliste

- 1: Schwenkachse der Rundschalteinheit, Mittellinie
- 5: Sperrrichtung

- 10: Gehäuse
- 11: Ausnehmung, ringnutförmig
- 12: Durchgangsbohrung
- 13: Gehäusebund
- 14: Stufenbohrung
- 15: Führungsabschnitt
- 16: Zylinderabschnitt
- 17: Deckelabschnitt
- 18: Bohrung, oben
- 19: Bohrung, unten

- 20: Lagerzapfen, hohl
- 21: Außenkontur, zylindrisch
- 22: Zapfenflansch
- 23: Telleraufsatz, Deckelflansch
- 24: Führungsdeckel
- 25: Verteilerplatte
- 26: Deckel
- 27, 28: Lippendichtungen
- 29: O-Ring

- 30: Schwenkteller
- 31: Sacklochbohrungen, Führungen
- 32: Wellenbund für Wälzlager
- 33: Einstellring
- 34: Bohrung
- 35: Drahtkugellager
- 36: Lagerdraht, unten; Teil des Innenrings
- 37: Lagerdraht, oben; Teil des Innenrings

- 40: Teilscheibe
- 41: Umgriffsbund
- 42: Teilungsbohrungen, konisch

- 50: Rastgesperre, Überlastsicherung
- 51: Sperrscheibe, Abtriebsscheibe
- 52: Sperrausnehmungen
- 53: Kupplungsverzahnung

- 55: Sperrerbolzen
- 56: Boden
- 57: Kegelstumpfabschnitt
- 58: Stirnfläche, plan
- 59: Federelement

- 60: Zahnstangenantrieb, Antrieb
- 61: Zahnstangen, Antriebselemente
- 62: Stirnrad, Zahnrad
- 64: Antriebsverzahnung
- 65: Kupplungsverzahnung
- 66: Taille
- 67: Endstück, zylindrisch
- 68: Wellenbund unten
- 69: Ringnut
- 71: Sicherungsring
- 73: Hubrichtung
- 75: Dämpfer

- 80: Positioniervorrichtung
- 81: Positionierbolzen
- 82: Mittellinie
- 83: Kolben
- 84: Steg
- 85: Kolbenunterseite
- 86: Kolbenoberseite
- 88: Kolbendichtung, doppeltdichtend
- 89: Distanzscheibe
- 91: Kolbenstange, oben
- 92: Dichtring
- 93: Kolbenstange, unten
- 94: Indexkonus
- 95: Dichtring

- 96: Schaltnut
- 97: Nutwandung, unten
- 98: Nutwandung, oben

- 100: Schaltbügel, gabelartig
- 101: Ring
- 102: Bohrung
- 103: Bügelarme, Kragarme
- 104: Nut
- 105, 106: Gabelzinken

## Patentansprüche

1. Rundschalteinheit mit einem - mittels eines in einem Gehäuse (10) angeordneten Antriebes (60) - um eine Schwenkachse (1) schwenkbaren Schwenkteller (30), wobei der Schwenkteller (30) in mindestens einer Anhalteposition mittels einer Positioniervorrichtung (80), die mindestens einen pneumatisch oder hydraulisch bewegbaren und in einer Ausnehmung (42) verrastbaren Positionierbolzen (81) aufweist, fixierbar ist,
**dadurch gekennzeichnet,**
- **dass** zwischen einem Abtriebselement (51) des Antriebs (60) und einem Antriebselement (61) des Antriebs (60) ein in einer Hubrichtung (73) axial längsverschiebbares Zahnrad (62) angeordnet ist,
- **dass** an dem Zahnrad (62) und an dem Abtriebselement (51) Kupplungselemente (65, 53) angeordnet sind, die außerhalb der Anhaltepositionen des Schwenktellers (30) im gegenseitigen Eingriff stehen,
- **dass** der seitlich versetzt zum Zahnrad (62) angeordnete Positionierbolzen (81) eine Mittellinie (82) hat, die zumindest annähernd parallel zur Mittellinie (1) orientiert ist, und
- **dass** der Positionierbolzen (81) zur Mitnahme des Zahnrades (62) in Hubrichtung (73) mit dem Zahnrad (62) über einen Schaltbügel (100) mechanisch gekoppelt ist.

2. Rundschalteinheit gemäß Anspruch 1,
**dadurch gekennzeichnet, dass** die Positioniervorrichtung (80) zwei Positionierbolzen (81) aufweist.

3. Rundschalteinheit gemäß Anspruch 2,
**dadurch gekennzeichnet, dass** die Mittellinien (82) der Positionierbolzen (81) und die Mittellinie (1) des Zahnrades (62) in einer Ebene liegen, wobei die Mittellinie (1) mittig zwischen den Mittellinien (82) liegt.

4. Rundschalteinheit gemäß Anspruch 1,
**dadurch gekennzeichnet, dass** der Positionierbolzen (81) einen Kolben (83) aufweist, der zwischen zwei Kolbenstangen (91, 93) angeordnet ist.

5. Rundschalteinheit gemäß Anspruch 4,
**dadurch gekennzeichnet, dass** der Kolben (83) eine Kolbendichtung (88) aufweist, die die gesamte radiale Kolbenaußenwandung bedeckt.

6. Rundschalteinheit gemäß Anspruch 1,
**dadurch gekennzeichnet, dass** der Positionierbolzen (81) an seinem dem Schwenkteller (30) zugewandten freien Ende einen Indexkonus (94) aufweist.

7. Rundschalteinheit gemäß Anspruch 1,
**dadurch gekennzeichnet, dass** der Positionierbolzen (81) an seinem dem Schwenkteller (30) abgewandten freien Ende eine Schaltnut (96) aufweist, in die der Schaltbügel (100) formschlüssig eingreift.

8. Rundschalteinheit gemäß Anspruch 1,
**dadurch gekennzeichnet, dass** das Zahnrad (62) in der Nähe seiner unteren Stirnseite ein zylindrisches Endstück (67) aufweist, auf dem zwischen einem Wellenbund (68) und einem Sicherungsring (71) der Schaltbügel (100) zentral - zumindest mit axialem Spiel - gelagert ist.

## Claims

1. A rotary indexing unit having a pivot plate (30) that can pivot about a swivel axis (1) by means of a drive (60) disposed in a housing (10), wherein the pivot plate (30) can be fixed in at least one arresting position by means of a positioning device (80), which comprises at least one pneumatically or hydraulically displaceable positioning bolt (81) that can be snapped into a recess (42),
**characterised**
- **in that** between an output element (51) of the drive (60) and an input element (61) of the drive (60) there is disposed a spur gear (62) that is axially longitudinally displaceable in a direction of travel,
- **in that** on the spur gear (62) and on the output element (51) there are disposed coupling elements (65, 53) that mesh with each other outside the arresting positions of the pivot plate (30),
- **in that** the positioning bolt (81) disposed laterally offset to the spur gear (62) has a centre line (82) that is orientated at least roughly parallel to the centre line (1),
- **and in that** the positioning bolt (81) is mechanically coupled to the spur gear (62) via the strap (100) in order to entrain the spur gear (61) in the direction of travel (73).

2. A rotary indexing unit according to Claim 1,
**characterized in that** the positioning device (80) comprises two positioning bolts (81).

3. A rotary indexing unit according to Claim 2,
**characterised in that** the centre lines (82) of the positioning bolts (81) and the centre line (1) of the spur gear (62) lie in one plane, the centre line (1) lying centrally between the centre lines (82).

4. A rotary indexing unit according to Claim 1,
**characterised in that** the positioning bolt (81) comprises a piston (83) that is disposed between two piston rods (91, 93).

5. A rotary indexing unit according to Claim 4,
**characterised in that** the piston (83) comprises a piston seal (88) that covers the entire radial outer wall of the piston.

6. A rotary indexing unit according to Claim 1,
**characterised in that** at its free end closer to the pivot plate (30) the positioning bolt (81) comprises an indexing cone (94).

7. A rotary indexing unit according to Claim 1,
**characterised in that** at its free end further from the pivot plate (30) the positioning bolt (81) comprises an indexing groove (96) into which the strap (100) engages with form fit.

8. A rotary indexing unit according to Claim 1,
**characterised in that** in the vicinity of its lower face the spur gear (62) comprises a cylindrical end piece (67), on which the strap (100) is centrally mounted - at least with axial clearance - between a shaft collar (68) and a retaining ring (71).

## Revendications

1. Unité de transfert circulaire comportant un plateau pivotant (30) monté par l'intermédiaire d'un moyen d'entraînement (60) prévu dans un boîtier (10) autour d'un axe de pivotement (1),
le plateau pivotant (30) pouvant être fixé dans au moins une position de retenue par l'intermédiaire d'un dispositif de positionnement (80) comportant un goujon de positionnement (81) déplacé par un moyen pneumatique ou hydraulique et verrouillable dans une cavité (42),
**caractérisée en ce qu'**
- un pignon denté (62) coulissant longitudinalement, axialement, dans une direction de levage (73) est prévu entre un élément entraîné (51) et un élément d'entraînement (61) du moyen d'entraînement (60),
- des éléments de couplage (65, 53) sont prévus sur le pignon denté (62), sur l'élément entraîné (51), ces moyens de couplage étant en prise réciproque au-delà des positions de retenue du plateau pivotant (30),
- le goujon de positionnement (81), décalé latéralement par rapport au pignon denté (62), a un axe (82) orienté au moins sensiblement parallèlement à l'axe (1), et
- le goujon de positionnement (81) est couplé mécaniquement au pignon denté (62) par l'intermédiaire d'un arceau de commutation (100) pour entraîner le pignon denté (62) dans la direction de soulèvement (73).

2. Unité de transfert circulaire selon la revendication 1,
**caractérisée en ce que**
le dispositif de positionnement (80) comporte deux goujons de positionnement (81).

3. Unité de transfert circulaire selon la revendication 2,
**caractérisée en ce que**
les axes (82) des goujons de positionnement (81) et l'axe (1) du pignon denté (62) sont situés dans un plan,
l'axe (1) étant au milieu entre les axes (82).

4. Unité de transfert circulaire selon la revendication 1,
**caractérisée en ce que**
le goujon de positionnement (81) comporte un piston (83) prévu entre deux tiges de piston (91, 93).

5. Unité de transfert circulaire selon la revendication 4,
**caractérisée en ce que**
le piston (83) comporte un joint de piston (88) qui couvre toute la paroi radiale extérieure du piston.

6. Unité de transfert circulaire selon la revendication 1,
**caractérisée en ce que**
le goujon de positionnement (81) présente un cône d'indexage (94) à son extrémité libre tournée vers le plateau pivotant (30).

7. Unité de transfert circulaire selon la revendication 1,
**caractérisée en ce que**
le goujon de positionnement (81) comporte à son extrémité libre non tournée vers le plateau pivotant (30), une rainure de commutation (96) dans laquelle l'arceau de commutation (100) pénètre par une liaison par la forme.

8. Unité de transfert circulaire selon la revendication 1,
**caractérisée en ce qu'**
à proximité de sa face frontale inférieure, le pignon denté (62) comporte une pièce d'extrémité (67) cylindrique, munie de l'arceau de commutation (100) de façon centrale, au moins avec du jeu axial, entre une collerette d'arbre (68) et une bague de fixation (71).
